# EUROPÄISCHE PATENTANMELDUNG

(11) **EP 2 348 602 A2**
(43) Veröffentlichungstag der Anmeldung: **27.07.2011**
(21) Anmeldenummer: 10014729.7
(22) Anmeldetag: 18.11.2010
(51) Int. Cl.: H02J 7/00, H02J 7/02, H01R 13/66, H01R 13/717

(54) **Elektrisches Unterputz-Installationsgerät mit Ladegerät für ein mobiles Audio- und Kommunikationsgerät**

(30) Priorität: 22.01.2010 DE 102010005393
(71) Anmelder: ABB AG, 68309 Mannheim (DE)
(72) Erfinder: Schallenberg, Wolfgang, Dipl.-Ing., 40599 Düsseldorf (DE); Wieske, Stefan, Dipl.-Ing., 58285 Gevelsberg (DE); Zapp, Robert, Dipl.-Ing., 58579 Schalksmühle (DE); Lehnert, Christian, 58239 Schwerte (DE)

(57) **Zusammenfassung**

Es wird ein elektrisches Unterputz-Installationsgerät (1) mit Ladegerät für ein mobiles Audio- und Kommunikationsgerät (28) vorgeschlagen,
• mit einem ein Ladegerät (4) und einen elektrischen 230V-Anschluss (5) beinhaltenden UP-Einsatz (3),
• mit einem Halter (18) mit Zentralscheibe (26) für die Aufnahme des mobilen Audio- und Kommunikationsgeräts (28),
• mit einem Abdeckrahmen (11),
• mit einer Leiterplatte (21), welche mittels mehrerer Steckvorrichtungen (9, 23, 24) die elektrische Verbindung zwischen dem mobilen Audio- und Kommunikationsgerät (28) und dem UP-Einsatz (3) sicherstellt,
• wobei im Abdeckrahmen (11) mindestens eine zur Ladezustandsanzeige dienende LED (16) angeordnet ist, welche über Kontaktfedern (15) eine korrespondierende Kontaktvorrichtung (22) der Leiterplatte (21) kontaktiert und
• wobei eine elektrisch mit dem Ladegerät (4) in Verbindung stehende Auswerte-und Steuerschaltung (7) zur Ansteuerung der mindestens einen LED (16) vorgesehen ist.

## Beschreibung

Die Erfindung betrifft ein elektrisches Unterputz-Installationsgerät mit Ladegerät für ein mobiles Audio- und Kommunikationsgerät.

Soll ein elektrisches Unterputz-Installationsgerät geschaffen werden, welches zur Aufladung der Akkumulatoren eines mobilen Audio- und Kommunikationsgerätes dienen soll, besteht vielfach der Wunsch, den aktuellen Status des Aufladevorganges anzuzeigen.

Der Erfindung liegt die Aufgabe zugrunde, ein elektrisches Unterputz-Installationsgerät mit Ladegerät für ein mobiles Audio- und Kommunikationsgerät anzugeben, bei welchem durch eine Ladeanzeige der aktuelle Status des Ladevorganges deutlich signalisiert wird.

Diese Aufgabe wird erfindungsgemäß gelöst durch ein elektrisches Unterputz-Installationsgerät mit Ladegerät für ein mobiles Audio- und Kommunikationsgerät,
- mit einem ein Ladegerät und einen elektrischen 230V-Anschluss beinhaltenden UP-Einsatz,
- mit einem Halter mit Zentralscheibe für die Aufnahme des mobilen Audio- und Kommunikationsgeräts,
- mit einem Abdeckrahmen,
- mit einer Leiterplatte, welche mittels mehrerer Steckvorrichtungen die elektrische Verbindung zwischen dem mobilen Audio- und Kommunikationsgerät und dem UP-Einsatz sicherstellt,
- wobei im Abdeckrahmen mindestens eine zur Ladezustandsanzeige dienende LED angeordnet ist, welche über Kontaktfedern eine Kontaktvorrichtung der Leiterplatte kontaktiert und
- wobei eine elektrisch mit dem Ladegerät in Verbindung stehende Auswerte-und Steuerschaltung zur Ansteuerung der mindestens einen LED vorgesehen ist.

Die mit der Erfindung erzielbaren Vorteile bestehen insbesondere darin, dass ein energieoptimiertes Aufladen des Akkumulators eines Audio- und Kommunikationsgeräts ermöglicht wird, da der aktuelle Aufladestatus der Ladung "Akku voll" nicht nur am Gerät selbst, sondern am Unterputz-Installationsgerät weithin sichtbar zur Anzeige gebracht wird. Dabei können die Zustände "Ladung aktiv" und "Akku voll" oder auch der augenblickliche Zustand des Akkus (aktueller Ladungsverlauf) über proportionale Farbanzeigen, z. B. einen der Ladung angepassten Wechsel von "Rot" nach "Grün" signalisiert werden. Dabei kann die Signalisierung entweder lediglich in einem bestimmten Abschnitt des Abdeckrahmens direkt zu erkennen sein oder es kann die das Unterputz-Installationsgerät umgebende Wandfläche zusätzlich einbezogen werden, d. h. das Umfeld des Abdeckrahmens wird entsprechend dem Aufladestatus unterschiedlich beleuchtet (Flächenbeleuchtung). In jedem Fall ist eine einfache Montage / Demontage der Baukomponenten UP-Einsatz, Halter mit Zentralscheibe, Abdeckrahmen des Unterputz-Installationsgerätes sichergestellt, d. h. die zusätzliche Bestückung des Abdeckrahmens mit mindestens einer zur Ladezustandsanzeige dienenden LED führt aufgrund der Kontaktierung Kontaktfedern / Kontaktvorrichtung in keiner Weise zu einer erschwerten Montage / Demontage der genannten Baukomponenten unter Verwendung elektrischer Leitungen oder ähnlicher Maßnahmen.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
Fig. 1 einen Schnitt durch Abdeckrahmen, Halter und Zentralscheibe eines elektrischen Unterputz-Installationsgerätes zur Aufnahme eines mobilen Audio-und Kommunikationsgerätes (rechter Abschnitt) sowie eine Detaildarstellung hierzu (linker Abschnitt),
Fig. 2 einen Schnitt durch Abdeckrahmen, Halter und Zentralscheibe vor der Montage (linker Abschnitt),
Fig. 3 eine perspektivische Sicht auf die Rückseite eines Abdeckrahmens,
Fig. 4 eine Sicht auf Abdeckrahmen, Halter und Leiterplatte vor der Montage in Form einer Explosionsdarstellung,
Fig. 5 eine perspektivische Sicht auf einen Abdeckrahmen mit LED-Modul und Lichtleiter als einzusetzende Baukomponenten,
Fig. 6 alle Hauptkomponenten des elektrischen Unterputz-Installationsgerätes zur Aufnahme eines mobilen Audio- und Kommunikationsgerätes in Form einer Explosionsdarstellung,
Fig. 7 eine perspektivische Sicht auf das elektrische Unterputz-Installationsgerät zur Aufnahme eines mobilen Audio- und Kommunikationsgerätes mit eingestecktem Audio- und Kommunikationsgerät,
Fig. 8 ein Blockschaltbild einer Ansteuerschaltung zum Unterputz-Installationsgerät zur Aufnahme eines mobilen Audio- und Kommunikationsgerätes.

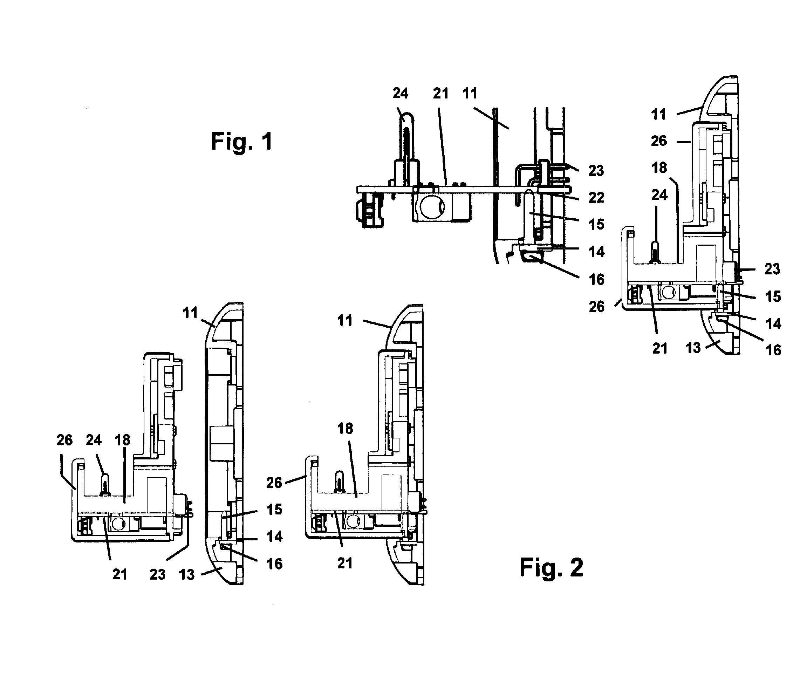

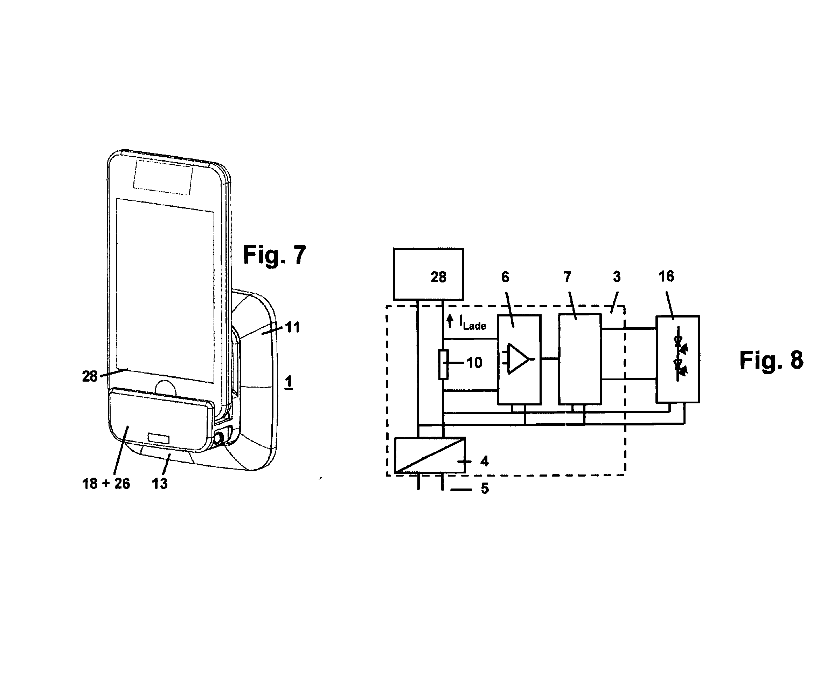

In Fig. 1 sind ein Schnitt durch Abdeckrahmen, Halter und Zentralscheibe eines elektrischen Unterputz-Installationsgerätes zur Aufnahme eines mobilen Audio- und Kommunikationsgerätes (rechter Abschnitt) sowie eine Detaildarstellung hierzu (linker Abschnitt) dargestellt. Es ist ein Halter 18 zu erkennen, in welchen eine Leiterplatte 21 eingesetzt ist, auf welcher einerseits eine Steckvorrichtung 24 zur elektrischen Kontaktierung mit einem mobilen Audio- und Kommunikationsgerät (siehe Ziffer 28 in Fig. 8) und andererseits eine Steckvorrichtung 23 für die elektrische Verbindung mit einem UP-Einsatz (Unterputz-Einsatz, siehe Ziffer 3 in Fig. 7) montiert sind. Der zur elektrischen Kontaktierung und zur Aufnahme des mobilen Audio- und Kommunikationsgerätes dienende Halter 18 wird komplettiert durch eine auf den UP-Einsatz oder auf den Halter aufgerastete Zentralscheibe 26 und einen Abdeckrahmen 11.

Aufgrund der vorgeschlagenen Konfiguration ist eine formschöne Einbindung/Integration des vorgeschlagenen elektrischen Unterputz-Installationsgerätes zur Aufnahme eines mobilen Audio- und Kommunikationsgerätes in ein Installationsgeräte-Unterputz-Programm respektive Schalter- und Steckdosen-Unterputz-Programm sowie eine Kombination mit weiteren Geräten, beispielsweise Schaltern, Tastern, Dimmem, Steckdosen, dieses Schalter- und Steckdosen-Unterputz-Programms möglich. Abdeckrahmen 11 und Zentralscheibe 26 sind gemäß den typischen Merkmalen eines speziellen Schalter- und Steckdosen-Unterputz-Programms gestaltet, während ein und derselbe UP-Einsatz und ein und derselbe Halter 18 inklusive Leiterplatte 21 für verschiedene Unterputz-Programme eingesetzt werden können.

Der Abdeckrahmen 11 ist in seinem bodenseitigen Rahmenabschnitt mit einem Lichtleiter 13 bestückt, in welchen mindestens eine LED 16 einstrahlt. Dabei ist diese mindestens eine LED 16 auf einem LED-Modul 14 (Baugruppenträger, vorzugsweise als Leiterplatte ausgebildet) montiert, welches des Weiteren mit mehreren Kontaktfedern 15 versehen ist. Diese Kontaktfedern 15 dienen zur elektrischen Kontaktierung mit einer korrespondierenden Kontaktvorrichtung 22 der Leiterplatte 21. Auf diese Art und Weise erfolgt die elektrische Speisung der mindestens einen LED 16 des LED-Moduls 14 vom UP-Einsatz 3 her über die Steckvorrichtung 23, die korrespondierende Kontaktvorrichtung 22 und die Kontaktfedern 15.

In Fig. 2 ist ein Schnitt durch Abdeckrahmen, Halter und Zentralscheibe vor der Montage (linker Abschnitt) dargestellt. Der linke Abschnitt zeigt eine erste vormontierte Baueinheit bestehend aus Zentralscheibe 26, Halter 18 inklusive Leiterplatte 21 mit Steckvorrichtungen 23, 24 einerseits und eine zweite vormontierte Baueinheit mit Abdeckrahmen 11 inklusive Lichtleiter 13 und LED-Modul 14 inklusive Kontaktfedern 15 und LED 16 andererseits. Der rechte Abschnitt dieser Fig. 2 entspricht wiederum dem rechten Abschnitt der Fig. 1 und zeigt die aus Zentralscheibe 26, Halter 18 inklusive Leiterplatte 21 und Abdeckrahmen 11 bestehende vormontierte Baueinheit.

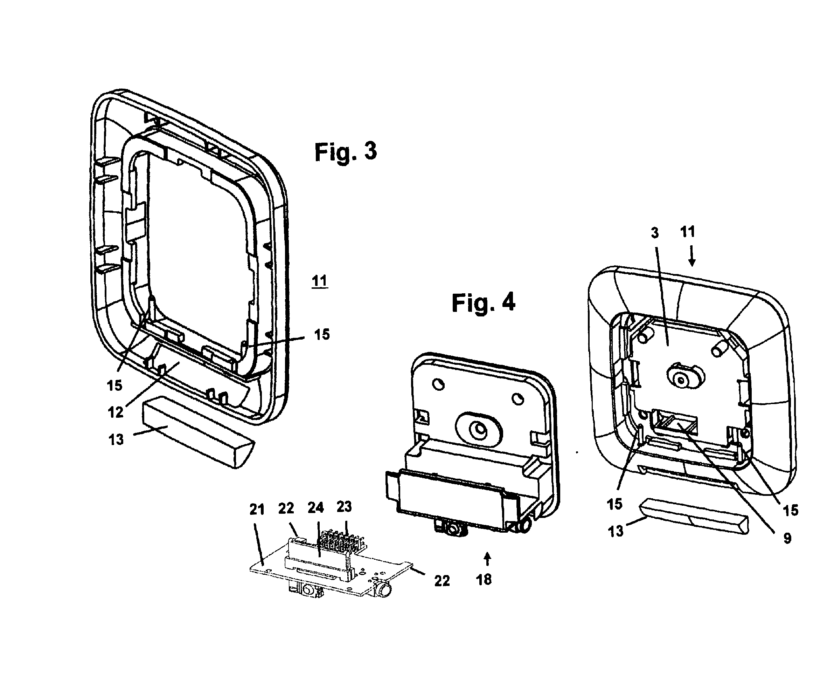

In Fig. 3 ist eine perspektivische Sicht auf die Rückseite eines Abdeckrahmens dargestellt. Der Abdeckrahmen 11 weist in seinem unteren Rahmenabschnitt eine zur Aufnahme des Lichtleiters 13 geeignete Öffnung 12 auf. Des Weiteren sind zwei geringfügig in die Zentralöffnung des Abdeckrahmens 11 ragende Kontaktfedern 15 zu erkennen.

In Fig. 4 ist eine Sicht auf Abdeckrahmen, Halter und Leiterplatte vor der Montage in Form einer Explosionsdarstellung dargestellt. Dabei ist der Abdeckrahmen 11 auf den UP-Einsatz 3 aufgesetzt und es ist eine Steckvorrichtung 9 dieses UP-Einsatzes 3 zu erkennen, welche im montierten Zustand die Steckvorrichtung 23 der Leiterplatte 21 kontaktiert, so dass die elektrische Verbindung zwischen dem mobilen Audio-und Kommunikationsgerät - via Steckvorrichtung 24 der Leiterplatte 21 - und dem UP-Einsatz 3 gegeben ist. Als weitere Bauteile des Abdeckrahmens 11 sind der Lichtleiter 13 und die Kontaktfedern 15 gezeigt. Bei der in den Halter 18 zu montierenden Leiterplatte 21 sind die zwei zur elektrischen Kontaktierung mit den Kontaktfedern 15 geeigneten korrespondierenden Kontaktvorrichtungen 22 skizziert.

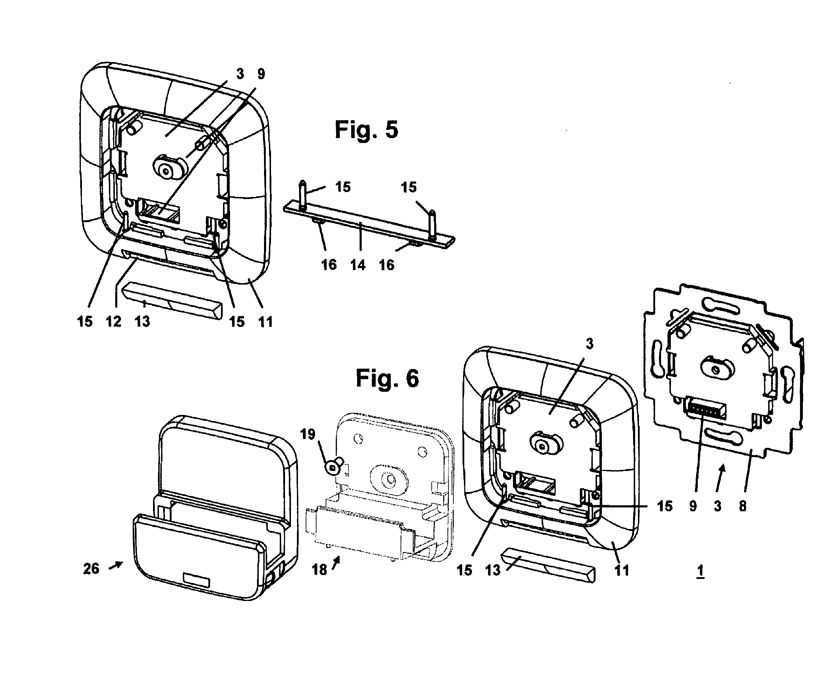

In Fig. 5 ist eine perspektivische Sicht auf einen Abdeckrahmen mit LED-Modul und Lichtleiter als einzusetzende Baukomponenten dargestellt. Es ist die Bestückung des LED-Moduls 14 mit zwei Kontaktfedern 15 auf seiner Oberseite und mit zwei LEDs 16 auf seiner Unterseite zu erkennen. Beim in Fig. 5 gezeigten Abdeckrahmen 11 ist das LED-Modul 14 bereits eingesetzt, dementsprechend sind die beiden Kontaktfedern 15 zu erkennen. Ferner ist die zur Aufnahme des Lichtleiters 13 dienende Öffnung 12 im Abdeckrahmen 11 gezeigt.

In Fig. 6 sind alle Hauptkomponenten des elektrischen Unterputz-Installationsgerätes 1 zur Aufnahme eines mobilen Audio- und Kommunikationsgerätes in Form einer Explosionsdarstellung dargestellt und zwar
- UP-Einsatz 3 mit Tragring 8 und Steckvorrichtung 9,
- Abdeckrahmen 11 mit Lichtleiter 13 und Kontaktfedern 15,
- Halter 18 mit Schraube 19 für die Befestigung des Halters 18 am UP-Einsatz 3,
- Zentralscheibe 26.

In Fig. 7 ist eine perspektivische Sicht auf das elektrische Unterputz-Installationsgerät zur Aufnahme eines mobilen Audio- und Kommunikationsgerätes mit eingestecktem Audio- und Kommunikationsgerät dargestellt. Das in den Halter 18 mit Zentralscheibe 26 aufgesetzte mobile Audio- und Kommunikationsgerät 28 ist elektrisch über die vorstehend erwähnten Steckvorrichtungen 24, 23 und 9 mit dem Ladegerät des UP-Einsatzes 3 verbunden, wobei der Abdeckrahmen 11 des Unterputz-Installationsgeräts 1 in seinem unteren Rahmenabschnitt mit dem Lichtleiter 13 versehen ist, um hierdurch den aktuellen Ladezustand anzuzeigen.

In Fig. 8 ist ein Blockschaltbild einer Ansteuerschaltung zum Unterputz-Installationsgerät zur Aufnahme eines mobilen Audio- und Kommunikationsgerätes dargestellt. Es ist ein Ladegerät (Netzteil) 4 zu erkennen, welches primärseitig einen 230V-Anschluss für Phase und Nulleiter eines Wechselspannungsnetzes aufweist und sekundärseitig einerseits mit dem mobilen Audio- und Kommunikationsgerät 28 (über die Steckvorrichtung 24), andererseits mit einem Vergleicher 6, einer nachgeschalteten Auswerte- und Steuerschaltung 7 und der mindestens einen LED 16 zur Ladezustandsanzeige verbunden ist. Der Vergleicher 6 ermittelt über einen Widerstand 10 den aktuellen Ladestrom I_{Lade} zum mobilen Audio- und Kommunikationsgerät 28 und vergleicht den ermittelten Wert mit offline vorgegebenen / eingespeicherten Vergleichswerten. In Abhängigkeit vom Ergebnis dieses Vergleichs erfolgt die Ansteuerung der mindestens einen LED 16 unter Einsatz der Auswerte- und Steuerschaltung 7. Die Ansteuerung der LED 16 kann erfolgen
- über eine "digitale" Ansteuerung "Ein"/"Aus" der LED 16, wobei "LED Ein" z. B. den Status "Ladung aktiv" und "LED Aus" den Status "Akku voll" signalisiert, oder
- durch eine Umschaltung zwischen zwei Farben der LED 16, z. B. "LED Rot" zeigt den Status "Ladung aktiv", "LED Grün" zeigt den Status "Akku voll", oder
- durch kontinuierlichen veränderbaren Farbverlauf der LED von "Rot" nach "Grün" entsprechend dem kontinuierlich veränderten Ladungsverlauf.

### Bezugszeichenliste

- 1: elektrisches Unterputz-Installationsgerät zur Aufnahme eines mobilen Audio- und Kommunikationsgeräts 28
- 2: --
- 3: UP-Einsatz inklusive elektrischem 230V-Anschluss, Anschluss für Lautsprecher, Ladegerät und Audioverstärker
- 4: Ladegerät
- 5: 230V-Anschluss
- 6: Vergleicher
- 7: Auswerte- und Steuerschaltung
- 8: Tragring
- 9: Steckvorrichtung für die Verbindung mit der Leiterplatte 21
- 10: Widerstand
- 11: Abdeckrahmen
- 12: Öffnung zur Aufnahme des Lichtleiters 13
- 13: Lichtleiter
- 14: LED-Modul (inklusive Leiterplatte)
- 15: Kontaktfedern
- 16: mindestens eine LED zur Ladezustandsanzeige
- 17: ---
- 18: Halter
- 19: Schraube
- 20: --
- 21: Leiterplatte
- 22: Kontaktvorrichtung zur Kontaktierung der Kontaktfedern 15
- 23: Steckvorrichtung für die Verbindung mit dem UP-Einsatz 3
- 24: Steckvorrichtung für die Verbindung mit dem mobilen Audio- und Kommunikationsgerät 28
- 25: --
- 26: Zentralscheibe
- 27: ---
- 28: mobiles Audio- und Kommunikationsgerät
- I_{Lade}: Ladestrom

## Patentansprüche

1. Elektrisches Unterputz-Installationsgerät (1) mit Ladegerät für ein mobiles Audio- und Kommunikationsgerät (28),
• mit einem ein Ladegerät (4) und einen elektrischen 230V-Anschluss (5) beinhaltenden UP-Einsatz (3),
• mit einem Halter (18) mit Zentralscheibe (26) für die Aufnahme des mobilen Audio- und Kommunikationsgeräts (28),
• mit einem Abdeckrahmen (11),
• mit einer Leiterplatte (21), welche mittels mehrerer Steckvorrichtungen (9, 23, 24) die elektrische Verbindung zwischen dem mobilen Audio- und Kommunikationsgerät (28) und dem UP-Einsatz (3) sicherstellt,
• wobei im Abdeckrahmen (11) mindestens eine zur Ladezustandsanzeige dienende LED (16) angeordnet ist, welche über Kontaktfedern (15) eine korrespondierenden Kontaktvorrichtung (22) der Leiterplatte (21) kontaktiert und
• wobei eine elektrisch mit dem Ladegerät (4) in Verbindung stehende Auswerte-und Steuerschaltung (7) zur Ansteuerung der mindestens einen LED (16) vorgesehen ist.

2. Elektrisches Unterputz-Installationsgerät (1) nach Anspruch 1, **dadurch gekennzeichnet, dass** die mindestens eine LED (16) in einen Lichtleiter (13) einstrahlt, welcher in einer Öffnung (12) im Abdeckrahmen (11) aufgenommen ist.

3. Elektrisches Unterputz-Installationsgerät (1) nach Anspruch 1 und/ oder 2, **dadurch gekennzeichnet, dass** ein LED-Modul (14) zur Aufnahme der mindestens einen LED (16) und der Kontaktfedern (16) vorgesehen ist.
